# EUROPÄISCHE PATENTSCHRIFT

(11) **EP 1 161 073 B1**
(45) Veröffentlichungstag und Bekanntmachung des Hinweises auf die Patenterteilung: **06.04.2005**
(21) Anmeldenummer: 01109222.8
(22) Anmeldetag: 14.04.2001
(51) Int. Cl.: H04M 19/00, H04M 11/06

(54) **Schaltungsanordnung für einen Breitbandübertrager**
Circuit arrangement for a broad band transformer
Circuit pour un transformateur à large bande

(30) Priorität: 28.04.2000 CH 8422000
(43) Veröffentlichungstag der Anmeldung: 05.12.2001
(73) Patentinhaber: Telbit AG, 8340 Hinwil (CH)
(72) Erfinder: Linggi, Walter, 8340 Hinwil (CH)
(74) Vertreter: Troesch Scheidegger Werner AG

(56) Entgegenhaltungen:
- EP-A- 0 590 242
- EP-A- 0 630 143
- EP-A- 0 923 221
- DE-A- 3 204 429

## Beschreibung

Die vorliegende Erfindung betrifft eine Schaltungsanordnung nach dem Oberbegriff des Patentanspruchs 1 sowie eine Verwendung der Schaltungsanordnung.

In der Fernmeldetechnik werden Übertragereinheiten (Übertrager) eingesetzt, welche in erster Linie eine vollständige galvanische Trennung von Fernmeldeeinrichtungen, d.h. beispielsweise von Fernmeldeendgeräten, gegenüber von Fernmeldeleitungen bewerkstelligen. Des weiteren müssen die Übertragereinheit die folgenden Bedingungen erfüllen:
- Symmetrischer Anschluss: für anzuschliessende Fernmeldeeinrichtungen (Endgeräte), welche selbst nicht symmetrisch sind bzw. sein müssen, werden diese über die Übertragereinheit symmetriert angeschlossen werden;
- Symmetrischer Anschluss von Endgeräten und deren zusätzlicher Speisung aus symmetrisch oder asymmetrisch ankommenden Fernmeldeleitungen, wie beispielsweise Koax-Leitungen etc.;
- Spannungsschutz der Endgeräte gegenüber den in langen Übertragungsleitungen induzierten Überspannungen;
- Berührungsschutz (Personenschutz) für Personen, welche an Endgeräten arbeiten;
- Anpassung der Endgeräte an durch Normen vorgegebene Impedanzen bzw. reale Leitungsimpedanzen;
- Potentialtrennung zwischen öffentlichen und privaten Telefonnetzen, z. B. beim Übergang zu einem Kraftwerknetz.

Die Versorgung der Endgeräte mit elektrischer Energie erfolgt mehrheitlich bei fast allen bekannten Telecom-Endgeräten (Telefone) direkt über die ankommenden Postfernmeldeleitungen selbst, d.h. über diese werden neben dem eigentlichen Fernmeldesignal auch die benötigte elektrische Energie zum Endgerät übertragen. Dabei können jedoch durch den Gleichstrom die Übertragungscharakteristiken von vorgeschalteten Übertragereinheiten (Übertrager), insbesondere im Frequenzbereich unterhalb 1 kHz, verändert, d.h. erheblich gedämpft werden, weil die durch die Wicklungen fliessenden Gleichstromanteile zu Sättigungserscheinungen der hochpermeablen Eisenkerne führen, welche in den Übertragertransformatoren vorhanden sind. Die Vormagnetisierung reduziert die Hauptinduktivität der Übertragertransformatoren und schiebt damit die untere Frequenzbandgrenze nach oben, was nicht zulässig ist.

In der digitalen drahtgebundenen Fernmeldetechnik (ISDN-Integrated Services Digital Network), in Zukunft XDSL, bei der heute eine Übertragungsrate von bis zu 8 MBit/s und mehr zu Endgeräten (ADSL/HDSL) vorgesehen ist, eignen sich bei gleichzeitiger Gleichstrom-Fernspeisung die bekannten bisherigen Übertragungseinheiten (Übertrager) nicht, da die digitalen Fernmeldesignale wegen des erwähnten Sättigungsverhaltens dann derart stark verändert werden, dass eine nachfolgende Signalerkennung nicht mehr bzw. nur schwer möglich ist. Es können sogenannte Bitfehler bei der Übertragung entstehen, welche sich je nach Codierart mehr oder weniger störend auswirken.

Es wird, insbesondere bei Verwendung langer Leitungen, daher oft alternativ vorgeschlagen, dass die Speisung der Endgeräte nicht über die Fernmeldeleitungen vorgenommen werden soll, sondern örtlich über separate lokale Netzteile erfolgen kann, die an das öffentliche Versorgungsnetz, das Energieversorgungssystem angeschlossen werden. Insbesondere dann, wenn sogenannte Schutzübertragungseinheiten, welche für eine Potentialtrennung eingesetzt werden, verwendet werden müssen. Nachteilig bei dieser Art der Energieversorgung von Endgeräten ist jedoch, dass zusätzlich zur ständigen Netz-Verfügbarkeit durch das Verbinden eines Netzteiles mit einem Endgerät dessen Eigenschaften auch negativ beeinflusst werden können. So wird als Folge einer Verbindung zwischen Endgerät und Netzteil, das nicht optimal konzipiert bzw. asymmetrisch ist, das Endgerät dann ebenfalls asymmetrisch beeinflusst. Zwar kann diesem Problem abgeholfen werden, indem entweder nur exakt symmetrische Netzteile zum Speisen von Endgeräten oder solche mit geringster kapazitiver Erdkopplung eingesetzt werden. Solche Netzteile sind aber entsprechend teuer in der Herstellung. Zudem werden die Endgeräte von der örtlich verfügbaren Energie abhängig, d.h. bei einem Netzausfall sind diese Endgeräte nicht mehr oder nur während einer begrenzten Dauer weiterhin betriebsfähig, wenn zusätzliche Energiespeicher eingesetzt werden (USV).

Der vorliegenden Erfindung liegt daher die Aufgabe zugrunde, eine Schaltungsanordnung für eine Übertragereinheit anzugeben, die eine symmetrische zentrale Fernspeisung angeschlossener Endgeräte über verfügbare Zweidraht-Leitungen ermöglicht, die einen einfachen Aufbau hat, die kostengünstig hergestellt werden kann und mit der die beschriebenen Mängel eliminiert werden können.

Diese Aufgabe wird durch die im kennzeichnenden Teil des Patentanspruchs 1 angegebenen Massnahmen gelöst. Vorteilhafte Ausgestaltungen der Erfindung sowie eine Verwendung sind in weiteren Ansprüchen angegeben.

Die Erfindung weist die folgenden Vorteile auf: Indem auf der Sekundärseite der Transformatoreinheit zwei Zweige mit je mindestens zwei in Serie geschaltete Induktivitäten vorgesehen sind, welche Zweige über eine weitere Kapazität verbunden sind, wobei in jedem der Zweige mindestens eine Hochfrequenz-Induktivität und mindestens eine Niederfrequenz-Induktivität enthalten sind, kann die Speisung von Endgeräten derart erfolgen, dass über der weiteren Kapazität der Übertragereinheit eine Speisespannung angelegt wird, wobei in dieser Anordnung einfache, kostengünstige Netzteile hierfür ausreichen. Die Endgeräte müssen als Folge davon keine externe eigene Versorgungsmöglichkeit zur Aufnahme von elektrischer Energie aufweisen, wenn der vom Endgerät benötigte Energiebedarf über die Fernmeldeleitung gedeckt wird. In diesem Fall spricht man von zentraler Speisung, oder kurz von ZB (Zentrale Batteriespeisung).

Bei Erweiterung der Übertragereinheit auf der Primärseite der Transformatoreinheit mit einer analog zur Sekundärseite ausgebildeten Schaltung wird eine galvanisch getrennte Fernspeisung über die Fernmeldeleitungen möglich, ohne dass dies aufgrund von über die Fernmeldeleitungen übertragenen Gleichströmen zu einer negativen Beeinflussung des Übertragungsverhaltens der Übertragereinheit führt.

Indem die Transformatoreinheiten der Übertragereinheiten selbst gleichstromfrei bleiben, können deren Eisenkerne nicht gesättigt werden, womit die erzielbare maximale Bandbreite für die Übertragereinheit bei gleichzeitiger Speisemöglichkeit erhalten bleibt, mit oder ohne Gleichstrom zum Endgerät gleichermassen funktionieren.

Die Erfindung wird nachfolgend anhand von Zeichnungen beispielsweise näher erläutert. Dabei zeigen
- Fig. 1: eine bekannte Schaltungsanordnung, welche aus einer Übertragereinheit 1, einer Anschlusseinheit 2 (Endgerät) und einem Netzteil 4 zur Versorgung der Anschlusseinheit mit elektrischer Energie besteht. Die Übertragereinheit besteht aus Übertrager 3 sowie zwei zusätzlichen Kondensatoren C1 und C2, welche die Wicklungen für Wechselstrom verbinden;
- Fig. 2: eine erfindungsgemässe Übertragereinheit mit symmetrischem Aufbau analog zu Fig. 1, jedoch zur lokalen symmetrischen Fernspeisung der Anschlusseinheit (Endgerät) über die Fernmeldeleitung, und
- Fig. 3: eine weitere Ausführungsform einer erfindungsgemässen Übertragereinheit analog zu Fig. 2, jedoch zur Fernspeisung der Anschlusseinheit (Endgerät) über eine längere ankommende Leitung, und über die galvanisch trennende symmetrische Übertrager-Einheit für Gleich- und Wechselstrom.

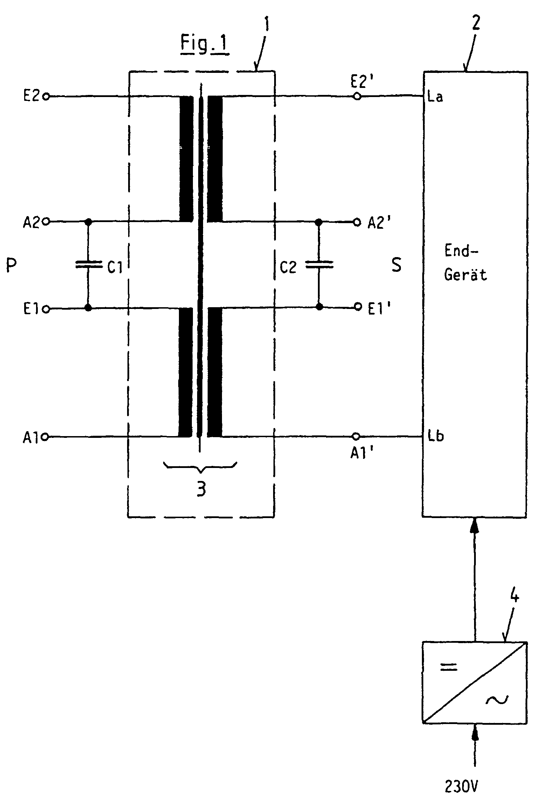

Fig. 1 zeigt eine an sich bekannte Schaltungsanordnung mit einer Übertragereinheit 1 ohne symmetrische Speisemöglichkeit mit Leitungsanschlüssen A1, E2 bzw. A1', E2', ein über die letztgenannten Anschlüsse A1', E2' mit der Übertragereinheit 1 verbundenes Endgerät 2 und ein Netzteil 4, welches das Endgerät 2 mit elektrischer Energie versorgt. Die Übertragereinheit 1 ist über die Anschlüsse A1, E2 mit einer ankommenden Fernmeldeleitung verbunden, welche normalerweise aus Kupfer besteht. Als Fernmeldeleitung werden jedoch oft auch asymmetrische Koax-Kabel eingesetzt, die Symmetrie zum Endgerät 2 bleibt jedoch erhalten, wenn eine solche Übertrager-Einheit benutzt wird. Bei einem digitalen Fernmeldenetz - beispielsweise vom Typ ISDN-(Integrated Services Digital Network) oder beispielsweise für ADSL/HDSL/XDSL-Anwendungen - werden derzeit Datensignale mit einer Übertragungsrate von bis zu 8 MBit/s übertragen, bald auch noch mehr. Entsprechend ist die untere und die obere Grenzfrequenz der Übertragungs-Bandbreite der Übertragereinheit 1 bzw. eine Übertragereinheit mit entsprechenden Eigenschaften zu wählen, wie sie eingangs erwähnt wurden.

Die in Fig. 1 dargestellte Übertragereinheit 1 besteht im wesentlichen aus einer Transformatoreinheit 3, bestehend aus je zwei symmetrischen Primär- und Sekundärwicklungen, welche je über eine Kapazität C1 bzw. C2 verbunden sind, und erfüllt die vorstehend genannten Anforderungen vollumfänglich. Insbesondere ist die Übertragereinheit 1 beidseitig symmetrisch aufgebaut, was im Idealfall zur optimalen ungestörten Übertragung von Signalen an das Endgerät 2 notwendig ist, weil die Fernmeldeleitung damit symmetrisch angeschlossen ist.

Wie erwähnt ist zur örtlichen Versorgung des Endgerätes 2 mit elektrischer Energie das Netzteil 4 vorgesehen, welches an das öffentliche Energieversorgungsnetz angeschlossen wird. Bei dieser bekannten Schaltungsanordnung ist es von grösster Bedeutung, dass auch das Netzteil 4 möglichst symmetrisch bzw. mit möglichst geringer Erdkopplung aufgebaut ist, denn allfällige Abweichungen von der Symmetrie wirken sich entsprechend nachteilig auf die La/Lb-Schnittstelle des Endgerätes 2 aus, welches an die Sekundärseite der Übertragereinheit 1 angeschlossen ist. Die Kapazität C2 verhindert den Gleichstromfluss im Übertrager. Als Folge einer asymmetrischen Energie-Zufuhr wird auch die Sekundärseite der Übertragereinheit 1 asymmetrisch, womit die symmetrierende Wirkung der Übertragereinheit 1 verschlechtert wird. Dies wirkt sich u.a. auf das Endgerät aus mit der Folge, dass in diesem grössere Störungen ankommen können (Übersprechen auch von anderen gleichartigen oder ähnlichen abgeschlossenen Parallel-Leitungen).

Bei der bekannten Schaltungsanordnung gemäss Fig. 1 sind demzufolge Netzteile 4 zu verwenden, welche sich durch eine hohe Symmetrie bzw. hohe Erdentkopplung auszeichnen.

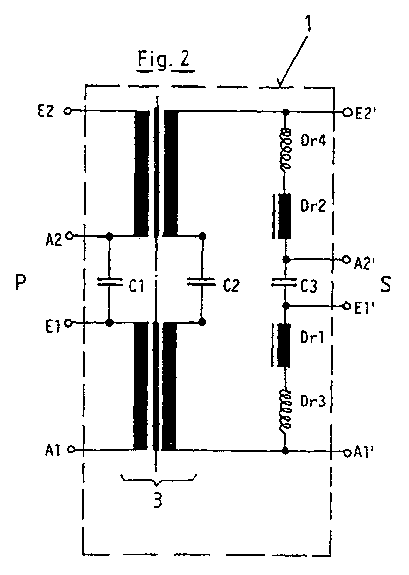

Fig. 2 zeigt eine erfindungsgemässe Übertragereinheit 1, bei der entsprechend der bekannten Ausführungsform eine bekannte Symmetrie-Transformatoreinheit 3 vorgesehen ist. Erfindungsgemäss sind auf der Sekundärseite der Transformatoreinheit 3 zwei, über eine Kapazität C3 miteinander verbundene Zweige vorgesehen, die je aus einer Hochfrequenz- und einer Niederfrequenz-Induktivität Dr3, Dr4 bzw. Dr1, Dr2 bestehen, welche in Serie geschaltet sind. Des weiteren wird ein Netzteil (in Fig. 2 nicht dargestellt) über die Anschlüsse A2' und E1' mit der Übertragereinheit 1 verbunden, wodurch eine Speisespannung über der Kapazität C3 angelegt wird bzw. ein Speisestrom über die induktiven Zweige und die angeschlossene Leitung symmetrisch zum speisenden Endgerät gelangen kann.

Indem die beiden identischen Zweige symmetrisch ausgelegt sind, bleibt die Übertragereinheit 1 in sich symmetrisch, und zum Endgerät können erfindungsgemäss - über die Anschlüsse A1' und E1' - sowohl Nutzsignale als auch elektrische Energie symmetrisch übertragen werden.

Die beiden Niederfrequenz-Induktivitäten Dr1 und Dr2 sind gleich gross und weisen vorzugsweise einen Wert von mehr als 1 H auf. Beispielsweise kann ein Gleichstrom von beispielsweise 10 mA bis 60 ... max. 80 mA fliessen. Die beiden, ebenfalls gleich grossen Hochfrequenz-Induktivitäten Dr3 und Dr4 weisen anderseits einen viel kleineren Wert von beispielsweise 1 mH auf, womit diese Hochfrequenz-Induktivitäten Dr3 und Dr4 mit kleiner Windungszahl sehr kleine Wickelkapazitäten aufweisen. Damit werden die über die Übertragereinheit 1 übertragenen hochfrequenten Nutzsignale bei hohen Übertragungsraten von 2 und mehr MBit/s durch die Gleichstromzufuhr über die symmetrischen induktiven Zweige nicht bedämpft, weil kleinere Wicklungs-Kapazitäten vorliegen und damit Wechselstromkurzschluss verhindern.

Bei Anwendungen in der Fernmeldetechnik werden die Niederfrequenz-Induktivitäten Dr1 und Dr2 derart dimensioniert, dass beispielsweise bei einer unteren üblichen Grenzfrequenz von 300 Hz die über die Übertragereinheit 1 übertragenen Nutzsignale nicht zusätzlich gedämpft werden. Auf der anderen Seite werden die Hochfrequenz-Induktivitäten Dr3 und Dr4 derart dimensioniert, dass die Eigenkapazitäten der durch eine höhere Windungszahl gekennzeichneten Niederfrequenz-Induktivitäten Dr1 und Dr2 unwirksam werden. Damit ist jedwelche zusätzliche Dämpfung zwischen der über die Übertragereinheit 1 übertragenen Signale ausgeschaltet, d.h. die Eigenschaften der Transformatoreinheit bleiben erhalten, und zwar mit oder ohne symmetrischer Gleichstromversorgung des Endgerätes.

Im übrigen erfolgt die Dimensionierung der Induktivitäten Dr1 bis Dr4 im Rahmen des fachmännischen Könnens, wobei sich der Fachmann an der Bedingung orientiert, dass die Breitbandigkeit der Übertragereinheit (d.h. unveränderte Nutzsignalübertragung zwischen etwa 250 Hz (Norm 300 Hz) und mehr als 2 MHz) bei gleichzeitiger symmetrischer Gleichstromübertragung erhalten bleibt. Diese Bandbreite ermöglichen heute bei günstigen Signal-Codierungen Übertragungs-Raten bis 8 MBit/s und mehr.

Die erfindungsgemässe Übertragereinheit 1 gemäss Fig. 2 eignet sich vorzüglich zur örtlichen zentralen Fernspeisung von Anschlusseinheiten bzw. Endgeräten über Fernmeldeleitungen (2-adrig), wobei die Energieversorgung vor Ort mittels kostengünstigen Netzteilen, welche an den Übertragereinheiten 1 angeschlossen werden, erfolgt. Allfällige Asymmetrien bei den Netzteilen werden durch die erfindungsgemässe Schaltung - d.h. mit genügend grossen Mitten-Kondensatoren C3, C4 - in der Übertragereinheit 1 symmetriert, allfällig überlagerte Gleichrichterstörungen zusätzlich gefiltert.

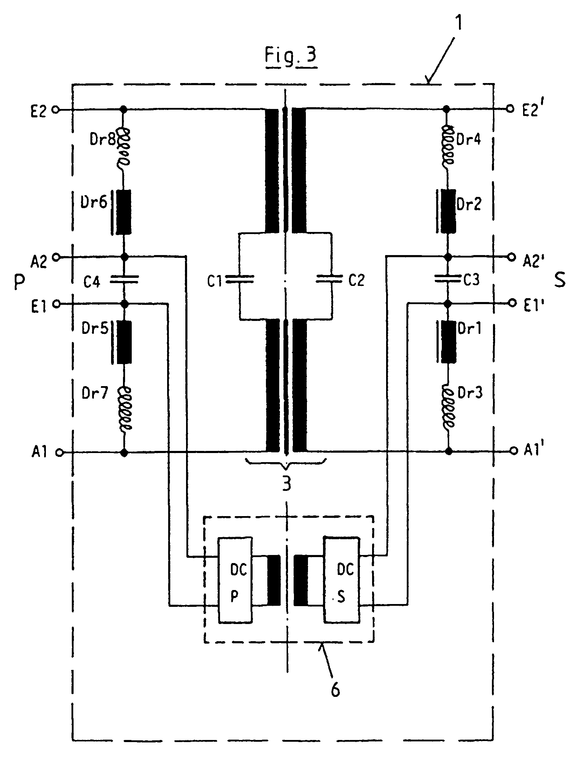

In Fig. 3 ist eine weitere Ausführungsform einer erfindungsgemässen Übertragereinheit 1 angegeben, wobei bei dieser Ausführungsform das an die Übertragereinheit 1 angeschlossene Endgerät (in Fig. 3 nicht dargestellt) über die Fernmeldeleitungen mit elektrischer Energie fernversorgt wird, d.h. die ankommenden als auch die abgehenden Fernmeldeleitungen sind sowohl für die Übertragung von Nutzsignalen als auch für die Übertragung von elektrischer Gleichstrom-Energie an die Endgeräte vorgesehen.

Das zu speisende Endgerät wird wiederum über die Anschlüsse A1' und E2' mit der Übertragereinheit 1 verbunden. Die Fernmeldeleitung wird an die Anschlüsse A2 bzw. E2 angeschlossen. Die Schaltung im Inneren der Übertragereinheit 1 umfasst die Ausführungsform der Schaltung gemäss Fig. 2, d.h. die Transformatoreinheit 3, bestehend aus zwei symmetrischen Primär- und Sekundärwicklungen, und die sekundärseitige Schaltung, bestehend aus den Induktivitäten Dr1 bis Dr4 und der Kapazität C3. Die weitere Ausführungsform gemäss Fig. 3 zeichnet sich nun ferner dadurch aus, dass auf der Primärseite P der Transformatoreinheit 3 eine weitere identische Speise-Schaltung vorgesehen ist, welche bezüglich Aufbau als auch bezüglich Dimensionierung der Schaltelemente demjenigen bzw. derjenigen auf der Sekundärseite S entspricht. So sind wiederum zwei, über eine Kapazität C4 miteinander verbundene Zweige vorgesehen, die je aus einer Hochfrequenz- und einer Niederfrequenzinduktivität Dr7, Dr8 bzw. Dr5, Dr6 bestehen, welche in Serie geschaltet sind. Über diese primärseitige Schaltung werden ankommende Gleichströme, welche über die Fernmeldeleitungen übertragen werden, ausgekoppelt, damit die Transformatoreinheit 3 nicht in die Sättigung geht. Hierzu wird parallel zur Kapazität C4 eine Gleichstrom-Wandlereinheit 6 geschaltet, die auf deren Sekundärseite parallel zur Kapazität C3 geschaltet ist. Damit werden Gleichstromanteile quasi über die Gleichstrom-Wandlereinheit 6 um die Transformatoreinheit 3 herum geleitet. Die Transformatoreinheit 3 wird daher weiterhin symmetrisch betrieben, womit eine Sättigung derselben ausgeschlossen ist.

Die Gleichstrom-Wandlereinheit 6 kann beispielsweise ein in der Form eines DC/DC-Umrichters realisiertes Schaltnetzteil sein, wobei bei diesem eine galvanische Trennung zwischen Primär- und Sekundärseite vorzusehen ist. Diesbezüglich wird stellvertretend auf Electronic Engineers' Handbook (Donald Christiansen, 4. Auflage, McGraw-Hill, 1996, Seiten 19.38 ff.) verwiesen.

Die Erfindung betrifft eine Schaltungsanordnung, welche die Eigenschaften von symmetrischen Fernmelde-Übertragern nutzt und zusätzlich die symmetrische Fernspeisung von Endgeräten über vorhandene zweiadrige Kupferfernmeldeleitungen möglich macht, ohne dass die Eigenschaften der verwendeten Übertrager selbst in irgendwelcher Weise nachteilig beeinflusst werden.

Die Übertragereinheit 1 beinhaltet einen Wechselstrom-Übertrager 3 (für Signale) und zusätzlich einen Gleichstrom-Übertrager 6 (DC-DC-Wandler), welche die völlige galvanische und symmetrische, erdfreie Trennung von ankommender Fernmeldeleitung zur abgehenden Fernmeldeleitung realisierst, welche so die symmetrische Fernspeisung eines angeschlossenen Endgerätes möglich macht.

Das angeschlossene Endgerät oder irgendwelche Fernmelde-Einrichtung (Fax, Modem, Telefonzentrale etc.) gemäss Fig. 2 oder 3 bleibt damit optimal in allen Eigenschaften an die Fernmeldeleitung angeschlossen und ist bezüglich Spannungsspitzen, Überspannungen und dergleichen geschützt. Damit werden Elektronikgeräte und Einheiten vor deren Zerstörung geschützt. Auch der Personenschutz, welche an Endgeräten oder an daran angeschlossenen Geräten arbeiten, ist gewährleistet.

## Patentansprüche

1. Schaltungsanordnung mit einer Übertragereinheit (1) zum Übertragen von elektrischen Signalen, wobei in der Übertragereinheit (1) eine Transformatoreinheit (3) vorgesehen ist, bestehend aus zwei symmetrischen Sekundärwicklungen (S1, S2), welche über eine Kapazität (C2) verbunden sind, **dadurch gekennzeichnet, dass** auf der Sekundärseite (S) der Transformatoreinheit (3) zwei Zweige mit je mindestens zwei in Serie geschalteten Induktivitäten (Dr1, Dr3; Dr2, Dr4) vorgesehen sind, welche Zweige über eine weitere Kapazität (C3) verbunden sind, wobei in jedem der Zweige mindestens eine Hochfrequenz-Induktivität (Dr3, Dr4) und mindestens eine Niederfrequenz-Induktivität (Dr1, Dr2) enthalten sind, und dass über der weiteren Kapazität (C3) eine Speisespannung zur Speisung von an die Sekundärseite der Übertragereinheit (1) angeschlossenen Anschlusseinheiten (2), beispielsweise Endgeräte, angelegt ist.

2. Schaltungsanordnung nach Anspruch 1, **dadurch gekennzeichnet, dass** die Speisespannung mit einer vorzugsweise an das öffentliche Energienetz angeschlossenen Speisungseinheit (4) erzeugbar ist und dass die Speisespannung über die Übertragereinheit (1) der Anschlusseinheit (2) symmetrisch beaufschlagt ist.

3. Schaltungsanordnung nach Anspruch 1, **dadurch gekennzeichnet, dass** die Speisespannung mit einer als Gleichstrom-Wandlereinheit arbeitenden Speisungseinheit (6) erzeugbar ist, welche primärseitig von der Primärseite (P) der Übertragereinheit (1) speisbar ist.

4. Schaltungsanordnung nach Anspruch 3, **dadurch gekennzeichnet, dass** auf der Primärseite (P) der Transformatoreinheit (3) zwei weitere Zweige mit je mindestens zwei in Serie geschalteten Induktivitäten (Dr6, Dr8; Dr5, Dr7) vorgesehen sind, welche Zweige über eine Kapazität (C4) verbunden sind, wobei in jedem der Zweige mindestens eine Hochfrequenz-Induktivität (Dr7, Dr8) und mindestens eine Niederfrequenz-Induktivität (Dr1, Dr2) enthalten ist, und dass die Speisungseinheit (4) parallel an die Kapazität (C4) angeschlossen ist.

5. Schaltungsanordnung nach einem der vorangehenden Ansprüche, **dadurch gekennzeichnet, dass** die Übertragereinheit (1) symmetrisch aufgebaut ist.

6. Schaltungsanordnung nach einem der vorangehenden Ansprüche, **dadurch gekennzeichnet, dass** in der Übertragereinheit (1) weitere Schaltelemente vorgesehen sind, mit Hilfe derer Leitungsanpassungen, insbesondere zur Anpassung von an die Übertragereinheit (1) anschliessbaren Anschlusseinheiten (2), vornehmbar sind.

7. Schaltungsanordnung nach einem der vorangehenden Ansprüche, **dadurch gekennzeichnet, dass** in der Übertragereinheit (3) mit beliebigem Spannungschutz einsetzbar sind und dass die Gleichstrom-Wandlereinheit mindestens die gleiche Spannungsfestigkeit aufweist wie die Transformatoreinheit.

8. Verwendung der Schaltungsanordnung nach einem der Ansprüche 1 bis 7 in der Telekommunikation, insbesondere bei digitalen Fernmeldenetzen, zur galvanisch getrennten Speisung bzw. Fernspeisung von Anschlusseinheiten (2) bzw. Endgeräten.

## Claims

1. Switching arrangement with a transmitter unit (1) for the transmitting of electrical signals, a transformer unit (3) being provided in the transmitter unit (1) and consisting of two symmetrical secondary windings (S1, S2), which are connected via a capacity (C2), **characterized in that** two branches each having at least two inductivities (Dr1, Dr3; Dr2, Dr4) connected in series are provided on the secondary side (S) of the transformer unit (3), said branches being connected via a further capacity (C3), at least one high frequency inductivity (Dr3, Dr4) and at least one low frequency inductivity (Dr1, Dr2) being included in each of the two branches, and that a supply voltage is applied for supplying connecting units (2), for example terminal devices, connected to the secondary side of the transmitter unit (1) over the further capacity (C3).

2. Switching arrangement according to Claim 1, **characterized in that** the supply voltage is generatable by a supply unit (4) preferably connected to the public energy network and that the supply voltage is loaded symmetrically via the transmitter unit (1) of the connecting unit (2).

3. Switching arrangement according to Claim 1, **characterized in that** the supply voltage is generatable by a supply unit (6) operating as a direct-current converter unit, the supply unit (6) on the primary side (P) being supplieable from the primary side (P) of the transformer unit (1).

4. Switching arrangement according to Claim 3, **characterized in that** two further branches each having at least two inductivities connected in series (Dr6, Dr8; Dr5, Dr7) are provided on the primary side (P) of the transformer unit (3), said branches being connected via a capacity (C4), in each of the branches at least one high frequency inductivity (Dr7, Dr8) and at least one low frequency inductivity (Dr1, Dr2) being included, and that the supply unit (4) is connected in parallel to the capacity (C4).

5. Switching arrangement according to one of the preceding Claims, **characterized in that** the transmitter unit (1) is built up symmetrically.

6. Switching arrangement according to one of the preceding Claims, **characterized in that** further switching elements are provided in the transmitter unit (1) by means of the switching elements power adaptations, especially for the adaptation to the connecting units (2) connectable to the transmitter unit (1), being performable.

7. Switching arrangement according to one of the preceding Claims, **characterized in that** transformer units (3) with arbitrary voltage protection are applicable in the transmitter unit (1) and that the direct-current converter unit has voltage stability, which is at least equal to the voltage stability of the transformer unit.

8. Usage of the switching arrangement according to one of the Claims 1 to 7, in telecommunications, in particular at digital telecommunications networks, for the galvanically separated supply and remote supply respectively of connecting units (2) and terminal devices respectively.

## Revendications

1. Circuit avec une unité de transmission (1) pour transmettre des signaux électriques, ladite unité de transmission (1) contenant une unité transformateur (3) consistant en deux enroulements secondaires (S1, S2) interconnectés par une capacité (C2), **caractérisé en ce que** deux branches, chacune avec au moins deux inductances en série (Dr1, Dr3; Dr2, Dr4), sont prévues du côte secondaire (S) de l'unité transformateur (3) et interconnectées par une autre capacité (C3), chacune des branches contenant au moins une inductance à haute fréquence (Dr3, Dr4) et au moins une inductance à basse fréquence (Dr1, Dr2), et **en ce qu'**une tension d'alimentation est appliquée sur ladite autre capacité (C3) pour alimenter des unités périphériques (2) prévues du côté secondaire de l'unité de transmission (1), comme par exemple des postes terminaux.

2. Circuit selon la revendication 1, **caractérisé en ce que** ladite tension d'alimentation peut être générée par une unité d'alimentation (4) qui est de préférence connectée au réseau d'énergie publique et **en ce que** la tension d'alimentation est appliquée symétriquement par l'intermédiaire de l'unité de transmission (1) de l'unité périphérique (2).

3. Circuit selon la revendication 1, **caractérisé en ce que** la tension d'alimentation peut être générée par une unité d'alimentation (6) opérant comme unité convertisseur de courant continu, l'unité d'alimentation étant alimentée du côté primaire par le côte primaire (P) de l'unité de transmission (1).

4. Circuit selon la revendication 3, **caractérisé par** deux autres branches ayant chacune au moins deux inductances en série (Dr6, Dr8; Dr5, Dr7) du côté primaire de l'unité transformateur (3), ces branches étant connectées par une capacité (4), chaque branche contenant au moins une inductance à haute fréquence (Dr7, Dr8) et au moins une inductance à basse fréquence (Dr1, Dr2) et en ce que l'unité d'alimentation (4) est connectée en parallèle à ladite capacité (C4).

5. Circuit selon l'une des revendications précédentes, **caractérisé en ce que** l'unité de transmission (1) est construite de manière symétrique.

6. Circuit selon l'une des revendications précédentes, **caractérisé en ce que** d'autres éléments de commutation sont prévus dans l'unité de transmission (1), à l'aide desquels l'on peut procéder à des adaptations, notamment à l'adaptation d'unités périphériques (2) qui peuvent être connectées à l'unité de transmission (1).

7. Circuit selon l'une des revendications précédentes, **caractérisé en ce que** l'on peut utiliser dans l'unité de transmission (1) des unités transformateurs à protection de tension arbitraire et **en ce que** l'unité convertisseur de courant continu présente au moins la même stabilité de tension que l'unité transformateur.

8. Utilisation d'un circuit selon l'une des revendications 1 à 7 dans la télécommunication, notamment dans des réseaux de télécommunication digitaux pour l'alimentation galvaniquement séparée respectivement l'alimentation à distance d'unités périphériques (2) respectivement de postes terminaux.
